# EUROPEAN PATENT APPLICATION

(11) **EP 1 584 718 A2**
(43) Date of publication of application: **12.10.2005**
(21) Application number: 05102450.3
(22) Date of filing: 29.03.2005
(51) Int. Cl.: D03D 3/02, D04D 9/00, B68G 7/10, A47C 31/00

(54) **Tubular sleeve containing a plastic profile and method for manufacturing such tubular sleeve.**

(30) Priority: 29.03.2004 SI 200400097
(71) Applicant: TSP, tovarna sukancev in trakov, d.d., 2000 Maribor (SI)
(72) Inventor: Ivanovic, Ivan, 2000 Maribor (SI)
(74) Representative: Kraljic, Janez

(57) **Abstract**

The tubular sleeve with plastic profile according to the above invention consists of a woven tubular sleeve (1) with a pocket (2), accommodating a plastic profile (3). The manufacturing method for the tubular sleeve with plastic profile (3) on a weaving machine is also described. In the manufacturing procedure of the tubular sleeve with plastic profile a plastic profile (3) of an appropriate cross section is woven into the tubular sleeve pocket (2). The tubular sleeve with plastic profile may be at least partly regarded as a trimming product, serving also as auxiliary material in the manufacture of OEM or other automotive seat covers.

## Description

The invention refers to a tubular sleeve with plastic profile, consisting of a woven tubular sleeve with a pocket, containing the plastic profile. The invention also refers to the manufacturing method of the tubular sleeve with plastic profile on a weaving machine. During the manufacturing procedure of the tubular sleeve with plastic profile a plastic profile of an appropriate cross section is woven into the tubular sleeve pocket. The tubular sleeve with plastic profile may at least partly be regarded as a woven trimming product, serving also as auxiliary material in the manufacture of automotive seat covers both within OEM and elsewhere.

The OEM automotive seat covers are tailored according to the seat model. The automotive seats are designed so as to provide also lateral support to a passenger, which is why certain parts of the automotive seat backrest and seating are convex or concave. In order to ensure the automotive seat cover to fit as best as possible to the seat on all parts, particularly on concave areas, a wire, integrated into certain seat cover edges is used to hold, thanks to its rigidity, the seat cover in its place and tight even on concave parts of the automotive seat. The sleeve with a wire enhances even further the custom-fit automotive seat covers.

A wire is usually introduced into the dart between various parts of the automotive seat covers helping shape individual parts of the automotive seat covers wits its rigidity.

Introduction of a wire into the tubular sleeve for improved automotive seat cover fit is a difficult and time consuming job.

One of the existing solutions of this problem represents a fastening strap, containing a wire, as described by the patent US 6, 199, 246. This patent says that the fastening strap is made of a woven or non-woven strap of synthetic material to be plied in the form of a letter U and a wire inserted into it. The flap into which a wire is inserted, is then closed into a pocket by means of spot or continuous welding of longitudinal sleeve edges.

Contrary to the solutions known so far this invention resolves this problem by means of a tubular sleeve containing a plastic profile. The tubular sleeve with a plastic profile is a woven tubular sleeve with a plastic profile woven into its pocket. As a result of its rigidity the plastic profile gives a suitable stability of shape to the products into which it is integrated. The flexibility of the plastic material, on the other hand, facilitates the installation of cut-to-measure semi-fmished products made of a tubular sleeve with plastic profile.

The method for manufacturing of such tubular sleeve with a plastic profile according to the above mentioned invention allows the plastic profile of the required shape and size to be woven into the tubular sleeve pocket during the tubular sleeve manufacture.

See the drawings below for a more detailed description of the tubular sleeve with plastic profile.

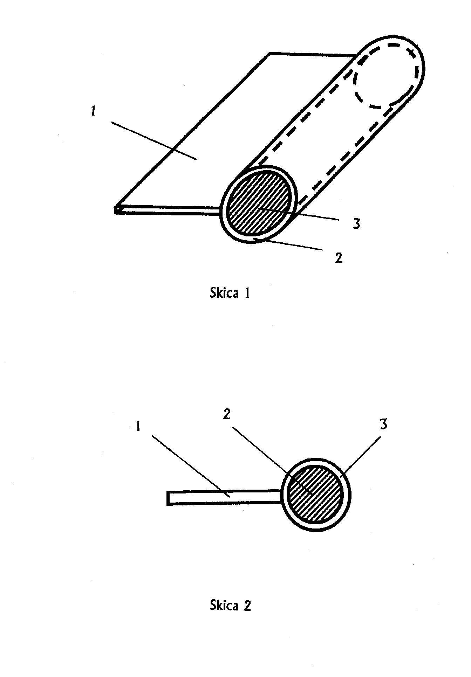

Drawing 1 shows one of the possible designs of the tubular sleeve with plastic profile according to the above invention. Drawing 2 shows a cross section of the tubular sleeve with plastic profile.

The tubular sleeve with plastic profile consists of a woven product - a tubular sleeve, consisting of the woven part 1 and a pocket 2 in the form of a longitudinal tube, with a plastic profile 3 placed in the pocket 2 of the tubular sleeve.

The pocket 2 of the tubular sleeve can be placed in any position considering the cross section. In drawing 1 the pocket is positioned on the edge of the tubular sleeve. Pocket 2, however, may be in any position on the tubular sleeve, which means that the pocket 2 of the tubular sleeve, containing the plastic profile 3, can be positioned anywhere between the l.h and r.h. longitudinal edge of the sleeve. If the pocket 2 is placed between the l.h. and r.h. longitudinal edge the woven part 2 extends to both sides of the sleeve pocket, containing the plastic profile.

The total width of the tubular sleeve with plastic profile is 5-100 mm.

The plastic profile 3, integrated into the tubular sleeve, may have a different shape of a rectangular cross section. The rectangular cross section of the above plastic profile may be a circle, an ellipse, a triangle and other regular or irregular geometrical forms or any other specifically favourable form.

The plastic profile integrated into the tubular sleeve has a cross section with its largest diameter measuring up to 10 mm.

The plastic profile may more or less easily move longitudinally in the tubular sleeve pocket. If so required by the nature of the finished product the stability of the plastic profile is enhanced by its longitudinal fixation to the tubular sleeve pocket. The plastic profile may be attached continuously, i.e. longitudinally in sections or longitudinally in spots to the tubular sleeve. If the plastic profile is made of a thermoplastic compound the tubular sleeve attaching to the plastic profile may carried out by a partial melting using an adequate heater. In other cases, various glues suitable for the material may be used for tubular sleeve fixing to the plastic profile.

The width of the opening of the tubular sleeve pocket depends on the plastic profile dimension and on the requirement concerning the tightness of the grip between the plastic profile and the tubular sleeve. By reducing the width of the tubular sleeve pocket opening a tighter fit is achieved between the tubular sleeve pocket and the plastic profile with the same plastic profile.

According to the above invention the tubular sleeve with plastic profile is to be manufactured by placing the plastic profile 3 into the tubular sleeve during the tubular sleeve weaving process, namely the plastic profile is led into the harness and the reed to the same as position as the warps; contrary to the warps, however, the plastic profile does not move vertically. In the tubular sleeve weaving process the plastic profile is woven around by the tubular sleeve pocket.

To stabilise the plastic profile in transverse directions during the manufacturing method a stationary guide is used in the harness, fixed to the machine as an additional element or the guide is attached to one or more idle heald frames of the weaving machine. Two wefts are led into the shed in the weaving process. One weft is always inserted above the plastic profile and the second underneath the plastic profile. Such movement of both wefts requires that the position of the plastic profile is not vertically changed. Individual warps running longitudinally along the plastic profile are lifted and lowered, thus changing their position depending on the type of weaving. The number of warp ends and weft threads in a centimetre is adjusted to the required properties of the end product, i.e. the tubular sleeve with plastic profile or a product into which the above indicated tubular sleeve with plastic profile is integrated.

If necessary, the plastic profile is longitudinally continuously, longitudinally by sections or longitudinally by spots fixed in the manufacturing process or later to the tubular sleeve in which it is woven.

This allows that a tubular sleeve with plastic profile is made of any length. As a semi-fmished product the tubular sleeve with plastic profile is wound around an appropriate reel or it is directly led into the cutting device, where the sleeve is cut to the required sizes and the cut tubular sleeves with plastic profile are additionally shaped.

If due to the nature of the product into which the tubular sleeve with plastic profile is to be integrated, longitudinal fixing of the plastic profile into the tubular sleeve is favourable or necessary, thermal melting, gluing of the plastic profile or fixing of the plastic profile to the tubular sleeve pocket is carried out. This attachment may be continuous, spot-type or only on some parts, as required, for example at either ends of subsequently cut pieces.

The tubular sleeve with plastic profile according to the indicated invention is used in the manufacture of automotive OEM seat covers. Cut to size and additionally shaped parts of the tubular sleeve with plastic profile are sewn during the manufacture of the automotive seat covers into the edges of contact surfaces of individual component parts of the OEM automotive seat covers.

The tubular sleeve with plastic profile according to the above indicated invention may also be used for women underwear, where a product needs to have a particular shape, e.g. bras, corsets, swimwear. The tubular sleeve with plastic profile according to the above mentioned invention is also used in the design of garments, in particular women garments, requiring a particular support, e.g. wide skirts of wedding dresses.

## Claims

1. A tubular sleeve with plastic profile, said tubular sleeve is a woven product, consisting of a woven part (1) and a pocket (2) in the form of a longitudinal tube, **characterised in that** a plastic profile (3) is placed in the tubular sleeve pocket (2).

2. The tubular sleeve with plastic profile according to claim 1, **characterised in that** the rectangular cross section of the above plastic profile (3) being a circle, an ellipse, a triangle or another regular or irregular geometrical form.

3. The tubular sleeve with plastic profile according to claim 1 or 2, **characterised in that** the plastic profile (3) being longitudinally continuously or in sections or longitudinally in spots, attached to the tubular sleeve pocket (2).

4. The tubular sleeve with plastic profile according to one of the previous claims **characterised in that** the total width of the tubular sleeve with plastic profile is 5 - 100 mm.

5. The tubular sleeve with plastic profile according to one of the previous claims, **characterized in that** the plastic profile (3), placed in the pocket (2) of the tubular sleeve, have a cross section with the diameter of up to 10 mm.

6. A method for manufacturing of the tubular sleeve with plastic profile according to one of the claims from 1 to 5, **characterised in that** the plastic profile (3) being placed into the tubular sleeve during the tubular sleeve weaving process and **in that** the plastic profile (3) is led into the harness and the reed to the same position as the warps, yet contrary to the warps, the plastic profile does not move vertically; in the above indicated tubular sleeve weaving procedure the plastic profile (3) is woven around by the tubular sleeve pocket (2).

7. The method for manufacturing of the tubular sleeve with plastic profile according to claim 6, **characterised in that** for the stabilisation of the plastic profile (3) in transverse directions during the manufacturing procedure in the harness a fixed guide, attached as an additional element to the machines or the guide is attached to one or more idle heald frames of the weaving machine is used.

8. The OEM automotive seat cover **characterized in that** it contains at least a part of the tubular sleeve with plastic profile according to any of the claims from 1 to 5.
